(19) Europäisches Patentamt
European Patent Office
Office européen des brevets

(11) EP 2 237 637 B1

(12) **EUROPEAN PATENT SPECIFICATION**

(45) Date of publication and mention of the grant of the patent:
**11.04.2018 Bulletin 2018/15**

(21) Application number: **07855701.4**

(22) Date of filing: **18.12.2007**

(51) Int Cl.:
**H04W 24/00** (2009.01)

(86) International application number:
**PCT/CN2007/003655**

(87) International publication number:
**WO 2009/079832 (02.07.2009 Gazette 2009/27)**

(54) **METHOD OF UPLINK MULTI-CELL JOINT DETECTION IN A TIME DIVISION -SYNCHRONOUS CODE DIVISION MULTIPLE ACCESS SYSTEM**

VERFAHREN ZUR AUFWÄRTSSTRECKEN-MEHRZELLEN-VERBUNDDETEKTION IN EINEM ZEITMULTIPLEXSYNCHRONEN CDMA-SYSTEM

PROCÉDÉ DE DÉTECTION COMBINÉE MULTICELLULE DE LIAISON MONTANTE DANS UN SYSTÈME D'ACCÈS MULTIPLE PAR RÉPARTITION EN CODE SYNCHRONE ET RÉPARTITION DANS LE TEMPS

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**06.10.2010 Bulletin 2010/40**

(73) Proprietor: **ZTE Corporation**
**Shenzhen, Guangdong 518057 (CN)**

(72) Inventors:
• **ZHANG, Jun**
**Guangdong 518057 (CN)**
• **DING, Meiling**
**Guangdong 518057 (CN)**

• **HUANG, He**
**Guangdong 518057 (CN)**

(74) Representative: **Awapatent AB**
**Junkersgatan 1**
**582 35 Linköping (SE)**

(56) References cited:
| | |
|---|---|
| **EP-A1- 1 592 275** | **EP-A1- 1 793 518** |
| **WO-A1-2007/028335** | **CN-A- 1 753 322** |
| **CN-A- 1 870 452** | **CN-A- 1 870 452** |
| **CN-A- 1 874 171** | **CN-A- 101 022 285** |
| **CN-A- 101 056 118** | **CN-A- 101 056 118** |
| **US-A1- 2004 224 688** | |

**Description**

Technical Field

The present invention relates to wireless communication systems, and more particularly, to a method for uplink multi-cell joint detection in a Time Division-Synchronous Code Division Multiple Access (TD-SCDMA) system.

Technical Background

Since Code Division Multiple Access (CDMA) system is a self-interference system, in the TD-SCDMA system, the interference between users limits further improvement of quality of service (QoS). Thus, a user equipment (UE) implements joint detection for its cell in downlink; while a Node B (base station) implements joint detection for its cell in uplink.

In 3GPP 25.331RRC (radio resource control) protocol, scrambling code information of neighbor cells is carried in a same-frequency measurement control message. Therefore, the UE may implement blind detection for neighbor cells in downlink as long as it has ability enough to do so. However, in 3GPP 25.433NBAP (Node B application part) protocol, since information of any of the neighbor cells is unable to be provided to cells of the Node B, the Node B cannot implement multi-cell joint detection in uplink. For users of other neighbor cells, especially in the vicinity of a switching zone, the interference caused by the UE can not be eliminated in its cell, thus, uplink transmission power of the UE in this cell will be increased in order to ensure QoS of the users, and users in other cells will raise the power accordingly, which results in the vicious circle and instability of the whole system.

Related technologies are known from WO2007/028335A1, EP1931154A1, CN101056118A, CN1870452A, US2004/224688A1, EP1793518A1 and EP1592275A1.

Summary of the Invention

A technical problem to be solved is how to provide necessary information for the Node B when the NBAP protocol process happens at an lub interface to establish a radio link for the user terminal, in order to implement the uplink multi-cell joint detection in a TD-SCDMA system.

The features of the method according to the present invention are defined in the independent claims. Further improvements and embodiments are provided in the dependent claims.

Provided is a method for uplink multi-cell joint detection in a Time Division-Synchronous Code Division Multiple Access (TD-SCDMA) system, comprising:

a radio network controller sending neighbor cell channel updating information to neighbor Node Bs of a cell where a user terminal is located when a Node B application part protocol process happens at an lub interface to establish a radio link for the user terminal; and

the neighbor Node Bs adding information of the user terminal into uplink multi-cell joint detection information of the cell where uplink joint detection is required to be performed for the user terminal after receiving the neighbor cell channel updating information.

The method may further comprise:

the radio network controller sending the neighbor cell channel updating information to the neighbor Node Bs when notifying a Node B where the user terminal is located to reconfigure the radio link; and

the neighbor Node Bs receiving the neighbor cell channel updating information, and updating the information of the user terminal in the uplink multi-cell joint detection information.

The method may further comprise:

the radio network controller sending neighbor cell channel deletion information to the neighbor Node Bs when the Node B application part protocol process happens at the lub interface to delete the radio link of the user terminal; and

the neighbor Node Bs deleting the information of the user terminal in the uplink multi-cell joint detection information after receiving the neighbor cell channel deletion information.

Further, the neighbor cell channel deletion information may include a user terminal identifier.

In the method, the Node B application part protocol process to establish the radio link for the user terminal may include a radio link setup process or a radio link addition process.

In the method, the neighbor Node Bs of the cell where the user terminal is located are Node Bs where cells which are found from neighbor cells of the cell where the user terminal is located are located, the neighbor Node Bs including a cell which contains a frequency point at which the established radio link is present and is also the cell where uplink joint detection is required to be performed for the user terminal.

In the method, the neighbor cell channel updating information may include a user terminal identifier as well as a carrier frequency on which the established radio link is present and a physical channel occupied by the established radio link.

Further, the neighbor cell channel updating information may also include scrambling codes of the cell where the user terminal is located and a list of cells where uplink joint detection is required to be performed by the neighbor Node Bs.

Using the method for uplink multi-cell joint detection in accordance with the patent document may cause the Node B to implement the uplink multi-cell joint detection so as to eliminate interference information between the UEs in neighbor cells and improve system capacity and quality of service (QoS) while reducing greatly lub interface messages. Furthermore, the more the Node Bs are, the more obvious the effect is.

Brief Description of the Drawings

FIG. 1 illustrates a flow chart of steps of an example of the method of the present invention;
FIG. 2 illustrates a flow chart of steps of an application example of the method of the present invention;
FIG. 3 illustrates a schematic diagram of an application scenario of three Node Bs including a total of 9 cells; and
FIG.4 illustrates a flow chart of steps of another application example of the method of the present invention.

Preferred Embodiments of the Invention

Embodiments not covered by the claims are to be regarded as examples. The present invention will be further described in detail below in conjunction with the accompanying drawings and the preferred embodiments.

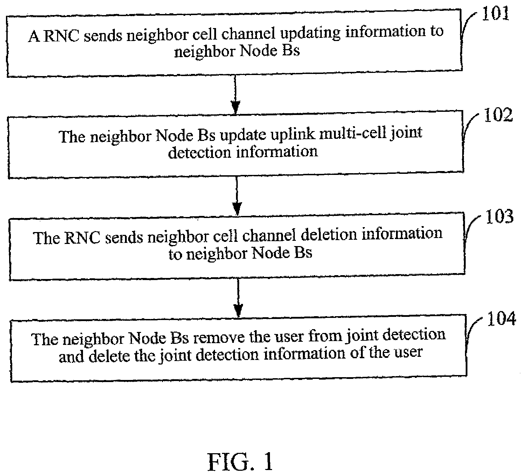

FIG. 1 illustrates a flow chart of steps of an example of the method of the present invention comprising steps:

step 101: a radio network controller (RNC) sends neighbor cell channel updating information to neighbor Node Bs of a cell where a user terminal is located when a process to establish a radio link for the user happens at an lub interface;
step 102: the neighbor Node Bs update uplink multi-cell joint detection information;
step 103: the RNC sends neighbor cell channel deletion information to the neighbor Node Bs; and
step 104: the neighbor Node Bs remove the user from joint detection and delete the joint detection message of the user.

In the step 101, the determination process for the neighbor Node Bs is to find a cell containing a frequency point at which the established radio link is present from neighbor cells configured for the cell where the user terminal is located (which will be referred to as the current cell hereinafter). Node Bs where these cells are located are the neighbor Node Bs.

Assuming that the frequency point at which a NBAP process to establish the radio link is initiated in the current cell is F, a neighbor cell set comprised of all the neighbor cells of the current cell is S, S={Cell1, Cell2, ... Cello}, where $o$ is the number of elements in the neighbor cell set S.

If there is the frequency point $F$ in Celli ($i \leq o$) in S, then the cell Celli is put into a same-frequency neighbor set Sc = {Cell1, Cell2, ... Cellp}, where $p$ represents the number of elements in the set Sc, $p \leq o$. The neighbor cells in the set Sc are classed by the Node Bs where they are located, that is, the neighbor cells which are located in the same Node B are classed into the same set:

$$Sni = \{Cellni\_1, Cellni\_2, \dots Cellni\_mi\}, \text{ where } i = 0, \ 1, \ \dots q,$$

where Sni represents a set of the neighbor cells of the current cell in $i^{th}$ Node B; $q$ represents the number of elements of the set Sn, $q \leq p$; *mi* represents the number of elements of the set Sni, $mi \geq 1$; $Sni \cap Snj = \phi$, where $i \neq j$, $i,j \leq q$; and

$$\sum_{i=1}^{q} mi = p \,.$$

The frequency point of the NBAP process is the frequency point at which the radio link established in the NBAP process is present. The neighbor cell channel updating information includes a UE identifier (e.g., which may be CRNC CCID), a carrier frequency on which the established radio link is present and a physical channel occupied by the established radio link. The neighbor channel updating message may further include scrambling codes of the cell where the UE is located and information regarding to a list of cells where uplink joint detection is required to be performed by the neighbor Node Bs.

In the above example of the present invention, the process happening at the Iub interface to establish the radio link for the user includes radio link setup or radio link addition. The present invention will be described specifically below using two application examples for the radio link setup.

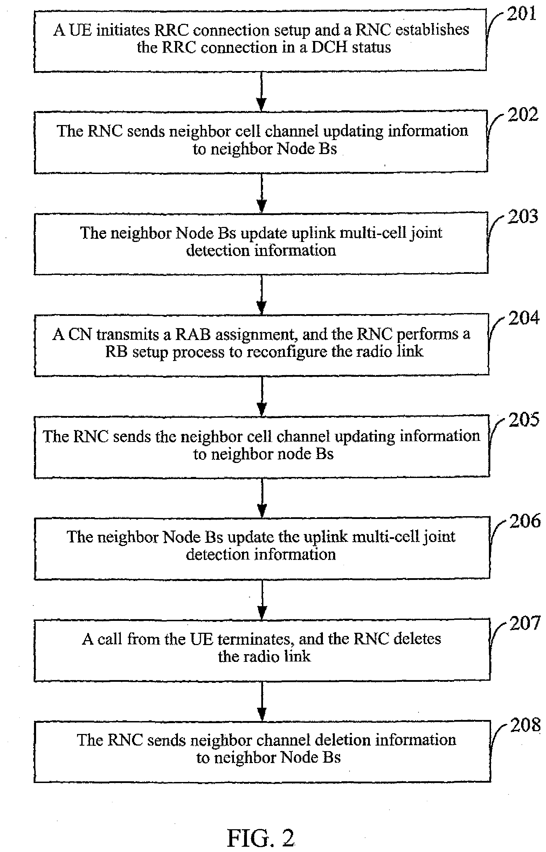

FIG. 2 illustrates a flow chart of steps of an application example of the method of the present invention. A synchronized radio link reconfiguration commit process for reconfiguring the radio link is further included in this application example to describe the present invention in more detail. Steps in this application example will be described below.

Step 201: a user U (whose UE identifier is U) initiates radio resource control (RRC) connection setup and a RNC decides to establish the RRC connection of the UE in a dedicated channel (DCH) status to establish a radio link (RL) at an Iub interface.

Step 202: after the radio link setup is completed, the RNC sends neighbor cell channel updating information to neighbor Node Bs.

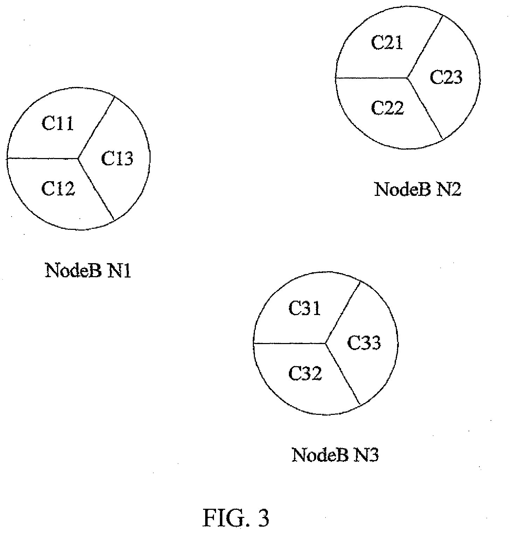

Based on a schematic diagram of an application scenario of the present invention as shown in FIG. 3, a determination principle for neighbor Node Bs in this step is described as follow.

As shown in FIG. 3, there is a total of three Node Bs (Node B N1, Node B N2 and Node B N3) in the application scenario, each Node B being a cell with three-carrier (F1, F2 and F3) three-sector configuration (each Node B having 3 cells and each cell having 3 carriers). Thus, there are 9 cells (C11, C12, C13; C21, C22, C23; C31, C32, C33) in total, which are neighbor cells relative to each other.

If the radio link of the user U is established in the cell C11, a frequency point is F1, a scrambling code is M1 and a channelization code is CC16/1, then a set comprised of all the neighbor cells of the current cell (i.e., the cell C11) is a neighbor cell set S = {C12, C13, C21, C22, C23, C31, C32, C33}, where the number of elements of the set S is 8. The frequency point F1 exists in each cell in the set S, thus, each cell in S is put into a same-frequency neighbor cell set Sc. In this application example, Sc = S, *p* represents the number of elements of the set Sc, *p* = 8. The neighbor cells in the set Sc are classed by the Node Bs where they are located, that is, the neighbor cells which are located in the same Node B are classed into the same set:

$$Sn1 = \{C12, C13\}, m1 = 2;$$

$$Sn2 = \{C21, C22, C23\}, m2 = 3;$$

$$Sn3 = \{C31, C32, C33\}, m3 = 3;$$

where:

$$Sni \bigcap Snj = \phi, \text{ where } i \neq j, i, j \leq 3;$$

$$\sum_{i=1}^{q} mi = p \,.$$

The RNC sends neighbor cell channel updating information, which contains the UE identifier U, the scrambling code M1 of the cell where the user is located, the carrier frequency F1 on which the established radio link is present, the physical channel CC16/1 occupied by the established radio link and information regarding to a list of cells where uplink joint detection is required to be performed by the neighbor Node Bs, to N1, N2 and N3, respectively.

For neighbor Node B N1, the list of the cells where joint detection is performed includes C12 and C13; for neighbor Node B N2, the list of the cells where joint detection is performed includes C21, C22 and C23; and for neighbor Node B N3, the list of the cells where joint detection is performed includes C31, C32 and C33.

Step 203: the neighbor Node Bs receive the neighbor cell channel updating information to update uplink multi-cell joint detection information.

In this step, for N1, if the user U does not exist, information of the user is newly created to be added into an uplink joint detection process for the cell C12 and C13; for N2, if the user U does not exist, information of the user is newly created to be added into an uplink joint detection process for C21, C22 and C23; and for N3, if the user U does not exist, information of the user is newly created to be added into an uplink joint detection process for C231, C32 and C33.

Step 204: a core network (CN) transmits a radio access bearer (RAB) assignment, and the RNC reconfigure the radio link at the Iub interface during a radio bearer (RB) setup process.

Step 205: after transmitting the synchronized radio link reconfiguration commit message to a Node B where the user U is located, the RNC sends the neighbor cell channel updating information to neighbor node Bs.

If the RL of the user U is reconfigured in the cell C11, the frequency point is F1, the scrambling code is M1 and the channelization code is changed to CC8/1, then the RNC sends neighbor cell channel updating information to N1, N2 and N3, respectively, with the UE identifier U, the scrambling code M1 of the cell where the user is located, the carrier frequency F1, the physical channel information CC8/1 in each piece of neighbor cell channel updating information being the same, respectively. For the list of cells where uplink joint detection is required to performed by the neighbor Node Bs, the step 202 may be referred to.

Step 206: the neighbor Node Bs receive the neighbor cell channel updating information to update the uplink multi-cell joint detection information.

In this step, for N1, if the user U exists, the information of the user is updated to update the uplink joint detection process for the cell C12 and C13; for N2, if the user U exists, the information of the user is updated to update the uplink joint detection process for C21, C22 and C23; and for N3, if the user U exists, the information of the user is updated to update the uplink joint detection process for C31, C32 and C33.

Step 207: when a call from the UE terminates, the CN triggers an Iu release process and the RNC performs a RRC release and a radio link deletion process.

Step 208: the RNC sends a neighbor channel deletion message containing the user identifier U to N1, N2 and N3, respectively.

For N1, the uplink joint detection process for the cell C12 and C13 is updated and the information of the user U in the joint detection message is deleted; for N2, the uplink joint detection process for C21, C22 and C23 is updated and the information of the user U in the joint detection message is deleted; and for N3, the uplink joint detection process for C231, C32 and C33 is updated and the information of the user U in the joint detection message is deleted.

It can be seen from this application example that updating the uplink multi-cell joint detection information comprises adding or deleting the information of the user terminal in the uplink multi-cell joint detection information and modifying the information of the user terminal in the uplink multi-cell joint detection information.

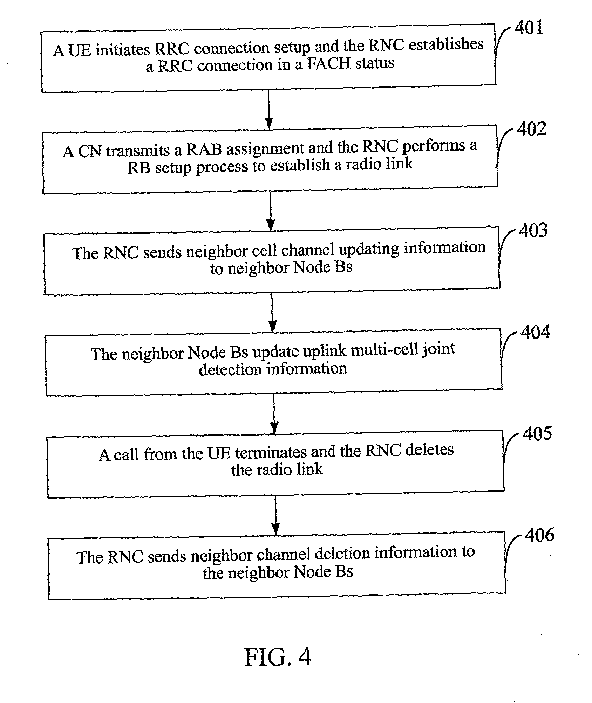

Still based on the schematic diagram of the application scenario of the present invention as shown in FIG. 3, FIG. 4 illustrates a flow chart of steps of another application example of the method of the present invention. The steps will be described below.

Step 401: a user U initiates RRC connection setup and a RNC decides to establish the RRC connection of the UE in a forward access channel (FACH) status.

Step 402: a CN transmits a RAB assignment and the RNC performs a RB setup process to establish a radio link at an Iub interface.

Step 403: after the radio link setup is completed, the RNC sends neighbor cell channel updating information to neighbor Node Bs. For the processing of the neighbor Node Bs in this step, the step 202 may be referred to. If the RL of the user U is established in the cell C11, the frequency point is F1, the scrambling code is M1 and the channelization code is CC8/1, then the RNC sends neighbor cell channel updating information to N1, N2 and N3, respectively, with the UE identifier U, the scrambling code M1 of the cell where the user is located, the carrier frequency F1, the physical channel information CC8/1 in each piece of neighbor cell channel updating information being the same, respectively.

For neighbor Node B N1, the list of the cells where joint detection is performed includes C12 and C13; for neighbor Node B N2, the list of the cells where joint detection is performed includes C21, C22 and C23; and for neighbor Node B N3, the list of the cells where joint detection is performed includes C31, C32 and C33.

Step 404: the neighbor Node Bs receive the neighbor cell channel updating information to update uplink multi-cell joint detection information.

In this step, for N1, if the user U does not exist, the information of the user is newly created to be added into an uplink joint detection process for the cell C12 and C13; for N2, if the user U does not exist, the information of the user is newly created to be added into an uplink joint detection process for C21, C22 and C23; and for N3, if the user U does not exist, the information of the user is newly created to be added into an uplink joint detection process for C31, C32 and C33.

Step 405: when a call from the UE terminates, the CN triggers an lu release process and the RNC performs a RRC release and radio link deletion process.

Step 406: the RNC sends a neighbor channel deletion message containing the user identifier U to N1, N2 and N3, respectively.

In this step, for N1, the uplink joint detection process for the cell C12 and C13 is updated and the information of the user U in the joint detection message is deleted; for N2, the uplink joint detection process for C21, C22 and C23 is updated and the information of the user U in the joint detection message is deleted; and for N3, the uplink joint detection process for C31, C32 and C33 is updated and the information of the user U in the joint detection message is deleted.

Using the method for uplink multi-cell joint detection in accordance with the present invention can implement the uplink multi-cell joint detection at the Node B. According to the principle of joint detection, the method in accordance with the present invention eliminates interference information between the UEs in neighbor cells and improves system capacity and quality of service (QoS) while reducing greatly lub interface messages. Furthermore, the more the Node Bs are, the more obvious the effect is.

Various modifications may be made to the embodiments described above by those skilled in the art without departing from the scope of the present invention defined by the appended claims. Therefore, the scope of the present invention is not limited to the above description, but is defined by the scope of the claims.

**Claims**

1. A method for uplink multi-cell joint detection in a Time Division-Synchronous Code Division Multiple Access system, **characterized by** comprising:

    a radio network controller sending neighbor cell channel updating information to neighbor Node Bs of a cell where a user terminal is located (101) when a Node B application part protocol process happens at an lub interface to establish a radio link for the user terminal; and
    the neighbor Node Bs adding information of the user terminal into uplink multi-cell joint detection information of the cell where uplink joint detection is required to be performed for the user terminal (102) after receiving the neighbor cell channel updating information,
    wherein the neighbor Node Bs of the cell where the user terminal is located are Node Bs where cells which are found from neighbor cells of the cell where the user terminal is located are located, the neighbor Node Bs including a cell which contains a frequency point at which the established radio link is present and is the cell where uplink joint detection is required to be performed for the user terminal.

2. The method according to claim 1, further comprising:

    the radio network controller sending the neighbor cell channel updating information to the neighbor Node Bs when notifying a Node B where the user terminal is located to reconfigure the radio link; and
    the neighbor Node Bs receiving the neighbor cell channel updating information, and updating the information of the user terminal in the uplink multi-cell joint detection information.

3. The method according to claim 1 or 2, further comprising:

    the radio network controller sending neighbor cell channel deletion information to the neighbor Node Bs (103) when the Node B application part protocol process happens at the lub interface to delete the radio link of the user terminal; and
    the neighbor Node Bs deleting the information of the user terminal in the uplink multi-cell joint detection information (104) after receiving the neighbor cell channel deletion information.

4. The method according to claim 1, wherein the Node B application part protocol process to establish the radio link for the user terminal includes a radio link setup process or a radio link addition process.

5. The method according to claim 1 or 2, wherein the neighbor cell channel updating information includes a user terminal identifier as well as a carrier frequency on which the established radio link is present and a physical channel occupied by the established radio link.

6. The method according to claim 5, wherein the neighbor cell channel updating information further includes scrambling codes of the cell where the user terminal is located and a list of cells where uplink joint detection is required to be performed by the neighbor Node Bs.

**7.** The method according to claim 3, wherein the neighbor cell channel deletion information includes a user terminal identifier.

**Patentansprüche**

**1.** Verfahren zur Aufwärtsstrecken-Mehrzellen-Verbunddetektion in einem zeitmultiplexsynchronen Code Division Multiple Access-System, **dadurch gekennzeichnet, dass** es umfasst:

dass eine Funknetzsteuereinheit Nachbarzellenkanal-Aktualisierungsinformationen an Nachbar-NodeBs einer Zelle sendet, wo sich ein Benutzerendgerät befindet (101), wenn ein NodeB Application Part Protocol-Prozess in einer lub-Schnittstelle stattfindet, um eine Funkverbindungsstrecke für das Benutzerendgerät herzustellen; und
dass die Nachbar-NodeBs Informationen des Benutzerendgerätes in Aufwärtsstrecken-Mehrzellen-Verbunddetektionsinformationen der Zelle einbinden, wenn eine Aufwärtsstrecken-Verbunddetektion für das Benutzerendgerät (102) ausgeführt werden muss, nachdem die Nachbarzellenkanal-Aktualisierungsinformationen empfangen wurden, wobei die Nachbar-NodeBs der Zelle, wo sich das Benutzerendgerät befindet, NodeBs sind, wo sich Zellen befinden, die von Nachbarzellen der Zelle aus, wo sich das Benutzerendgerät befindet, gefunden werden, wobei die Nachbar-NodeBs eine Zelle enthalten, die einen Frequenzpunkt enthält, an dem die hergestellte Funkverbindungsstrecke vorhanden ist, und die Zelle ist, wo eine Aufwärtsstrecken-Verbunddetektion für das Benutzerendgerät ausgeführt werden muss.

**2.** Verfahren nach Anspruch 1, das des Weiteren umfasst:

dass die Funknetzsteuereinheit die Nachbarzellenkanal-Aktualisierungsinformationen an die Nachbar-NodeBs sendet, wenn ein NodeB, wo sich das Benutzerendgerät befindet, benachrichtigt wird, die Funkverbindungsstrecke zu rekonfigurieren; und
dass die Nachbar-NodeBs die Nachbarzellenkanal-Aktualisierungsinformationen empfangen und die Informationen des Benutzerendgerätes in den Aufwärtsstrecken-Mehrzellen-Verbunddetektionsinformationen aktualisieren.

**3.** Verfahren nach Anspruch 1 oder 2, das des Weiteren umfasst:

dass die Funknetzsteuereinheit Nachbarzellenkanal-Löschungsinformationen an die Nachbar-NodeBs sendet (103), wenn der NodeB Application Part Protocol-Prozess in der lub-Schnittstelle stattfindet, um die Funkverbindungsstrecke des Benutzerendgerätes zu löschen; und
dass die Nachbar-NodeBs die Informationen des Benutzerendgerätes in den Aufwärtsstrecken-Mehrzellen-Verbunddetektionsinformationen (104) löschen, nachdem die Nachbarzellenkanal-Löschungsinformationen empfangen wurden.

**4.** Verfahren nach Anspruch 1, wobei der NodeB Application Part Protocol-Prozess zum Herstellen der Funkverbindungsstrecke für das Benutzerendgerät einen Funkverbindungsstrecken-Einrichtungsprozess oder einen Funkverbindungsstrecken-Hinzufügungsprozess enthält.

**5.** Verfahren nach Anspruch 1 oder 2, wobei die Nachbarzellenkanal-Aktualisierungsinformationen einen Benutzerendgerätidentifikator sowie eine Trägerfrequenz, auf der die hergestellte Funkverbindungsstrecke vorhanden ist, und einen physischen Kanal, der durch die hergestellte Funkverbindungsstrecke belegt wird, enthalten.

**6.** Verfahren nach Anspruch 5, wobei die Nachbarzellenkanal-Aktualisierungsinformationen des Weiteren Verwürfelungscodes der Zelle, wo sich das Benutzerendgerät befindet, und eine Liste von Zellen, wo eine Aufwärtsstrecken-Verbunddetektion durch die Nachbar-NodeBs ausgeführt werden muss, enthalten.

**7.** Verfahren nach Anspruch 3, wobei die Nachbarzellenkanal-Löschungsinformationen einen Benutzerendgerätidentifikator enthalten.

**Revendications**

1. Procédé de détection conjointe multicellulaire de liaison montante dans un système d'accès multiples par répartition dans le temps et par répartition de code synchrone, **caractérisé en ce qu'**il comprend :

   un organe de commande de réseau radio envoyant des informations de mise à jour de canal de cellules voisines à des noeuds B voisins d'une cellule où se trouve un terminal d'utilisateur (101) lorsqu'un processus de protocole de partie d'application de noeud B se déroule à une interface lub pour établir une liaison radio pour le terminal d'utilisateur ; et
   les noeuds B voisins ajoutant des informations du terminal d'utilisateur à des informations de détection conjointe multicellulaire de liaison montante de la cellule où une détection conjointe de liaison montante doit être effectuée pour le terminal d'utilisateur (102) après la réception des informations de mise à jour de canal de cellules voisines, dans lequel les noeuds B voisins de la cellule où se trouve le terminal d'utilisateur sont des noeuds B où se trouvent des cellules qui sont découvertes à partir de cellules voisines de la cellule où se trouve le terminal d'utilisateur, les noeuds B voisins comprenant une cellule contenant un point de fréquence auquel la liaison radio établie est présente et qui est la cellule où une détection conjointe de liaison montante doit être effectuée pour le terminal d'utilisateur.

2. Procédé selon la revendication 1, comprenant en outre :

   l'organe de commande de réseau radio envoyant les informations de mise à jour de canal de cellules voisines aux noeuds B voisins lors de la notification, à un noeud B, de l'emplacement du terminal d'utilisateur pour reconfigurer la liaison radio ; et
   les noeuds B voisins recevant les informations de mise à jour de canal de cellules voisines et mettant à jour les informations du terminal d'utilisateur dans les informations de détection conjointe multicellulaire de liaison montante.

3. Procédé selon la revendication 1 ou 2, comprenant en outre :

   l'organe de commande de réseau radio envoyant des informations de suppression de canal de cellules voisines aux noeuds B voisins (103) lorsque le processus de protocole de partie d'application de noeud B se déroule à l'interface lub pour supprimer la liaison radio du terminal d'utilisateur ; et
   les noeuds B voisins supprimant les informations du terminal d'utilisateur dans les informations de détection conjointe multicellulaire de liaison montante (104) après la réception des informations de suppression de canal de cellules voisines.

4. Procédé selon la revendication 1, dans lequel le processus de protocole de partie d'application de noeud B pour établir la liaison radio pour le terminal d'utilisateur comprend un processus de configuration de liaison radio ou un processus d'ajout de liaison radio.

5. Procédé selon la revendication 1 ou 2, dans lequel les informations de mise à jour de canal de cellules voisines comprennent un identifiant de terminal d'utilisateur ainsi qu'une fréquence de porteuse à laquelle la liaison radio établie est présente et un canal physique occupé par la liaison radio établie.

6. Procédé selon la revendication 5, dans lequel les informations de mise à jour de canal de cellules voisines comprennent en outre des codes de brouillage de la cellule où se trouve le terminal d'utilisateur et une liste de cellules où une détection conjointe de liaison montante doit être effectuée par les noeuds B voisins.

7. Procédé selon la revendication 3, dans lequel les informations de suppression de canal de cellules voisines comprennent un identifiant de terminal d'utilisateur.

| A RNC sends neighbor cell channel updating information to neighbor Node Bs | ⌐101 |

| The neighbor Node Bs update uplink multi-cell joint detection information | ⌐102 |

| The RNC sends neighbor cell channel deletion information to neighbor Node Bs | ⌐103 |

| The neighbor Node Bs remove the user from joint detection and delete the joint detection information of the user | ⌐104 |

FIG. 1

A UE initiates RRC connection setup and a RNC establishes the RRC connection in a DCH status ⟍201

The RNC sends neighbor cell channel updating information to neighbor Node Bs ⟍202

The neighbor Node Bs update uplink multi-cell joint detection information ⟍203

A CN transmits a RAB assignment, and the RNC performs a RB setup process to reconfigure the radio link ⟍204

The RNC sends the neighbor cell channel updating information to neighbor node Bs ⟍205

The neighbor Node Bs update the uplink multi-cell joint detection information ⟍206

A call from the UE terminates, and the RNC deletes the radio link ⟍207

The RNC sends neighbor channel deletion information to neighbor Node Bs ⟍208

FIG. 2

FIG. 3

A UE initiates RRC connection setup and the RNC establishes a RRC connection in a FACH status ⌐401

A CN transmits a RAB assignment and the RNC performs a RB setup process to establish a radio link ⌐402

The RNC sends neighbor cell channel updating information to neighbor Node Bs ⌐403

The neighbor Node Bs update uplink multi-cell joint detection information ⌐404

A call from the UE terminates and the RNC deletes the radio link ⌐405

The RNC sends neighbor channel deletion information to the neighbor Node Bs ⌐406

FIG. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007028335 A1
- EP 1931154 A1
- CN 101056118 A
- CN 1870452 A
- US 2004224688 A1
- EP 1793518 A1
- EP 1592275 A1